(19) Europäisches Patentamt
European Patent Office
Office européen des brevets

(11) **EP 2 745 158 B1**

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(21) Anmeldenummer: **12751293.7**

(22) Anmeldetag: **09.08.2012**

(51) Int Cl.:
**G02B 21/14** *(2006.01)* **G01B 11/06** *(2006.01)*
**G01B 9/04** *(2006.01)*

(86) Internationale Anmeldenummer:
**PCT/EP2012/065595**

(87) Internationale Veröffentlichungsnummer:
**WO 2013/023988 (21.02.2013 Gazette 2013/08)**

(54) **MESSVERFAHREN FÜR HÖHENPROFILE VON OBERFLÄCHEN**

MEASUREMENT METHOD FOR HEIGHT PROFILES OF SURFACES

PROCÉDÉ DE MESURE POUR DES PROFILS DE HAUTEUR DE SURFACES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2011 DE 102011052721**

(43) Veröffentlichungstag der Anmeldung:
**25.06.2014 Patentblatt 2014/26**

(73) Patentinhaber: **Unity Semiconductor GmbH**
**01099 Dresden (DE)**

(72) Erfinder:
• **SROCKA, Bernd**
**13125 Berlin (DE)**
• **SCHMIDT, Christine**
**10557 Berlin (DE)**

• **LANGHANS, Ralf**
**01109 Dresden (DE)**

(74) Vertreter: **Weisse, Renate**
**Bleibtreustrasse 38**
**10623 Berlin (DE)**

(56) Entgegenhaltungen:
EP-A1- 2 214 045    WO-A1-03/029872
JP-A- 11 133 308    US-A1- 2007 268 545
US-A1- 2010 195 873

• ROBERT HOFFMAN ET AL: "modulation contrast microscope", APPLIED OPTICS, OPTICAL SOCIETY OF AMERICA, WASHINGTON, DC; US, Bd. 14, Nr. 5, 1. Mai 1975 (1975-05-01), Seiten 1169-1176, XP002603823, ISSN: 0003-6935, DOI: 10.1364/AO.14.001169

## Beschreibung

### Technisches Gebiet

Die Erfindung betrifft eine Anordnung zur optischen Messung von Höhenprofilen von Oberflächen, enthaltend

(a) eine Strahlungsquelle zur Beleuchtung der Oberfläche mit Licht aus der Strahlungsquelle; und
(b) ein optisches Aufnahmesystem zur Aufnahme eines Bildes des Höhenprofils mit einer Kamera und einem Objektiv zur Abbildung der Objektebene in eine Bildebene, wobei das Objektiv eine Austrittspupille und eine Eintrittspupille aufweist. Die Erfindung betrifft auch die Verwendung einer solchen Anordnung und ein Verfahren zur optischen Messung von Höhenprofilen von Oberflächen.

Bei der Produktion von Micro-Electro-Mechanical-Systems (MEMS) - Bauteilen ist es vielfach notwendig, Oberflächenprofile zu ermitteln. Dabei ist es häufig ausreichend, das Profil qualitativ zu ermitteln. In anderen Anwendungen muss es quantitativ vermessen werden. Beispiele solcher Anwendungen sind die Prüfung von Drucksensoren, Mikrolinsen und/oder Mikrolinsenarrays, die Funktionsprüfung von Beschleunigungs-, Drehraten- und Lagesensoren oder von Mikrospiegel-Arrays in DMDs (DMD = Digital micromirror device).

### Stand der Technik

Es sind verschiedene Verfahren zur optischen Profilmessung bekannt und werden kommerziell umgesetzt. Die Verfahren basieren vorwiegend auf der Weißlichtinterferometrie, der konfokalen Abbildung, der Triangulation oder der Wellenfront-Analyse.
All diesen Verfahren ist gemeinsam, dass sie entweder vergleichsweise langsam sind oder sehr aufwändige Zusatzelemente über die Bildaufnahmeeinheit hinaus erfordern. Die Geschwindigkeitsbegrenzung ergibt sich daraus, dass entweder nur punktuell, bzw. in einer Linie gemessen wird oder nur eine Höhenscheibe pro Aufnahme erfasst wird.
Zusatzelemente sind je nach Ausführung Interferometer, konfokale Abbildungssysteme, präzise Höhentische oder Objektivhöhenversteller sowie spezielle Sensoren, z.B. Hartmann-Schack-Sensoren für die Wellenfront -Analyse.
Es sind ferner "Hoffmann"-Bilder bekannt, beispielsweise aus EP 2214 045 A1 und Robert Hoffmann et al.:"modulation contrast microscope", Applied Optics, Optical Society of America, Washington DC, US, Bd. 14, Nr.5, 1.Mai 1975 (1975--05-01), Seiten 1169. Ein Hoffmann-Bild hat andere Eigenschaften als ein DIC-Bild.
US 2010/195873 A1 offenbart einen Wellenfrontanalysator mit einem bewegten Filter zur sequentiellen Aufzeichnung einzelner Scans.

### Offenbarung der Erfindung

Es ist Aufgabe der Erfindung, eine Anordnung der eingangs genannten Art zu schaffen, die einfach aufgebaut ist, einen hohen Probendurchsatz hat und eine leichte und zuverlässige Bestimmung der Profilmerkmale erlaubt. Erfindungsgemäß wird die Aufgabe mit einer Anordnung mit den Merkmalen des Anspruchs 1, durch den Verwendungsanspruch 5 und durch das Verfahren nach Anspruch 7 gelöst. Dabei ist das Bild ein Differentialinterferenzkontrastbild und Höhengradienten sind innerhalb des Höhenprofils durch Intensitätsgradienten repräsentiert, welche quantitativ oder qualitativ auswertbar sind.
Differentialinterferenzkontrastbilder (DIC) haben die Eigenschaft bei einem Objekt eine Höhenänderung durch einen Intensitätsunterschied abzubilden. Wenn derartige Bilder einer aus einem einheitlichen, nicht doppel-brechenden Material bestehende Oberfläche aufgenommen werden, wird die Oberflächenprofilierung als Intensitätsbild sichtbar. Die Aufnahme erfolgt unter Einsatz eines geeigneten optischen Elements zur Erzeugung eines DIC-Bildes. Der Wellenlängenbereich des für die Aufnahme genutzten Lichtes wird so gewählt, dass das Oberflächenmaterial reflektierend ist und Interferenzen von in das Material hinein-gestrahlten Lichtanteilen nicht störend wirken.
Die Erzeugung des DIC-Bildes ist aus der DE 10 2011 050 674.8 der Anmelderin bekannt, die nachstehend erläutert wird.
Bekannte DIC-Anordnungen werden zur Sichtbarmachung von Kleinstlebewesen und organischen Oberflächenstrukturen in der Biologie oder zur Sichtbarmachung von Kristalleigenschaften in der Mineralogie genutzt. Es hat sich jedoch herausgestellt, dass DIC-Anordnungen und Verfahren auch zur Messung von Oberflächenstrukturen geeignet sind. Dabei werden die Intensitätsverteilungen im Bild konkret ausgewertet.
Eine vorteilhafte Verwendung der erfindungsgemäße Anordnung ist dadurch gekennzeichnet, dass die Oberflächen Strukturen mit einem definierten Profil aufweisen, bei denen Intensitätsgradienten im Differentialinterferenzkontrastbild, die innerhalb einer vorgegebenen Toleranz und innerhalb eines vorgegebenen Bereichs einen von einem Soll-Wert abweichenden Wert oder einen innerhalb einer vorgegebenen Toleranz und innerhalb eines vorgegebenen Bereichs liegenden, ausgewählten Wert, insbesondere Null, annehmen, einen Defekt anzeigen.

Die Intensitätsgradienten repräsentieren die Oberflächengradienten der zu untersuchenden Oberfläche. Wenn die Intensitätsgradienten außerhalb eines Toleranzbereichs um einen ausgewählten Wert liegen, hat die Oberfläche einen Defekt. Es gibt auch Anwendungen, bei denen umgekehrt ein Defekt mit hoher Sicherheit immer dann angenommen werden kann, wenn kein Intensitätsgradient vorliegt, d.h. wenn die Oberfläche in einem vorgegebenen Bereich nicht gekrümmt ist.

Ein Beispiel für eine solche Anwendung ist die Untersuchung von Membranen von Drucksensoren auf Micro-Electro-Mechanical Systems (MEMS)-Basis, bei denen Intensitätsgradienten im Differentialinterferenzkontrastbild, die innerhalb einer vorgegebenen Toleranz und innerhalb eines vorgegebenen Bereichs Null sind, eine defekte Membran anzeigen. Eine intakte Membran hat gewöhnlich einen gekrümmten Verlauf.

Ein weiteres, erfindungsgemäßes Beispiel ist die Untersuchung von Oberflächen, die Mikrolinsen und/oder Mikrolinsenarrays mit konkav und/oder konvex gewölbten Linsenoberflächen umfassen, bei denen Intensitätsgradienten im Differentialinterferenzkontrastbild, die innerhalb einer vorgegebenen Toleranz und innerhalb eines vorgegebenen Bereichs Null sind, eine fehlende Linse anzeigen.

Die Oberflächen können auch Beschleunigungs-, Drehraten und/oder Lagesensoren in MEMS-Ausführung umfassen, bei welchen Probenmasse an Federn vorgesehen ist, deren Bewegung eine Neigung der Probenoberfläche bewirkt, welche im Differentialinterferenzkontrastbild darstellbar und mit Referenzen vergleichbar ist. Die Sensoren basieren darauf, dass eine geeignete Probenmasse an mikroskopischen Federn aufgehängt wird, die sich dann unter dem Einfluss der Schwerkraft, der Rotation und/oder der Lage bewegt. Die Bewegung bewirkt eine Neigung einer beobachtbaren Oberfläche. Fehlfunktionen können an unzureichender oder überschwingender Neigung erkannt werden.

Die erfindungsgemäße Anordnung kann zur Untersuchung von Oberflächen eines Mikrospiegelarrays eines Digital Micromirror Device (DMD) verwendet werden, welche an Federelementen befestigte, steuerbare Spiegel aufweisen, deren Ausrichtung im Differentialinterferenzkontrastbild darstellbar und mit Referenzen vergleichbar ist.

Die erfindungsgemäße Anordnung zur optischen Messung von Höhenprofilen von Oberflächen, enthält

(a) eine Strahlungsquelle zur Beleuchtung der Oberfläche mit Licht aus der Strahlungsquelle; und
(b) ein optisches Aufnahmesystem zur Aufnahme eines Bildes des Höhenprofils mit einer Kamera und einem Objektiv zur Abbildung der Objektebene in eine Bildebene, wobei das Objektiv eine Austrittspupille und eine Eintrittspupille aufweist.

Die erfindungsgemäße Anordnung enthält weiterhin

(c) eine Köhlersche Beleuchtungoptik zur Beleuchtung der Oberfläche mit Licht aus der Strahlungsquelle, wobei die Eintrittspupille des Objektivs in der Beleuchtungspupille der Köhlerschen Beleuchtungsoptik liegt; und
(d) ein oder mehrere Bauelemente zur Erzeugung eines Differentialinterferenzkontrastbildes, bei dem Höhengradienten innerhalb des Höhenprofils durch Intensitätsgradienten repräsentiert sind, welche quantitativ oder qualitativ auswertbar sind.

Die Bauelemente zur Erzeugung eines Differentialinterferenzkontrastbildes enthalten keine aufwändigen Nomarski-Prismen, Polarisatoren, Analysatoren und sonstige Filter.

Wichtiger Bestandteil der erfindungsgemäßen Anordnung sind Mittel zur Auswertung der in dem DIC-Bild erhaltenen Intensitätswerte. Das DIC-Bild wird anders als bei bekannten Anordnungen nicht lediglich erzeugt und betrachtet, sondern - vorzugweise maschinell und automatisiert - ausgewertet. Eine automatische Auswertung der Intensitätswerte erlaubt auf diese Weise automatisierte Eingriffe und Korrekturen der zu untersuchenden Prozesse oder Anordnungen.

Bei der Erfindung sind die Bauelemente zur Erzeugung eines Differentialinterferenzkontrastbildes statt von Nomarski-Prismen von einem Amplitudenfilter in der Austrittspupille des Objektivs mit einem Amplitudentransmissionsfaktor $F_{DIC}(x,y)$ gebildet, der Formel genügt:

$$2 \cdot F_{DIC}(x, y) = F_+(x, y) \cdot e^{+iP_0} + F_-(x, y) = 2 \cdot T_0 \cdot \cos\left(P_{\max}(-x \cdot \sin\varphi + y \cdot \cos\varphi) + \frac{P_0}{2}\right) \cdot e^{+i\frac{P_0}{2}}$$

wobei

x,y: Koordinaten in der Austrittspupillenebene
$F_{DIC}(x,y)$: Funktioneller Ausdruck zur Beschreibung der Amplitudenfiltertransmission und der Phase des Amplitudenfilters in Abhängigkeit von den Koordinaten x und y

t(x,y): variabler, reeller Teil des Amplitudentransmissionsfaktors des Amplitudenfilters

$$\text{mit } t(x, y) = T_0 \cdot \cos\left( P_{\max}(-x \cdot \sin\varphi + y \cdot \cos\varphi) + \frac{P_0}{2} \right)$$

T(x,y): Transmissionsgrad des Amplitudenfilters. Bezeichnet $F^*_{DIC}(x,y)$ das konjugiert komplexe $F_{DIC}(x,y)$, dann

$$T(x, y) = F_{DIC}(x, y) \cdot F^*_{DIC}(x, y) = t^2(x, y)$$

F+(x,y): "positiver" Anteil von $F_{DIC}$, mit $F_+(x,y) = T_0 \cdot e^{+iP\max \cdot (-x \cdot \sin\varphi + y \cdot \cos\varphi)}$
$\varphi$: Richtungswinkel der Wirkung des DICs in der Austrittspupillenebene
P(x,y): Phasenverlauf des Amplitudenfilters mit

$$P(x, y) = \arg(F_{DIC}) = \begin{cases} \dfrac{P_0}{2} & -\pi \leq 2P_{\max} \cdot (-x \cdot \sin\varphi + y \cdot \cos\varphi) + P_0 \leq \pi \\[2ex] \dfrac{P_0}{2} + \pi & \pi \leq 2P_{\max} \cdot (-x \cdot \sin\varphi + y \cdot \cos\varphi) + P_0 \leq 3\pi \end{cases}$$

F-(x,y): "negativer" Anteil von $F_{DIC}$, mit

$$F_+(x, y) \cdot F_-(x, y) = T_0 \cdot e^{+iP_{\max} \cdot (-x \cdot \sin\varphi + y \cdot \cos\varphi)} \cdot T_0 \cdot e^{-iP_{\max} \cdot (-x \cdot \sin\varphi + y \cdot \cos\varphi)} = T_0^2$$

$P_0$: konstanter, reeller Phasenoffset des Amplitudenfilters $F_{DIC}(x,y)$
To: konstanter, reeller Amplitudentransmissionsfaktor von $F_{DIC}$, bzw. $F_+$ und $F_-$
$P_{max}$: konstante, reelle Maximalphase von $F_+$ bzw. $F_-$

Mit einer solchen Anordnung wird eine besonders gute, quantitative Auswertung der Intensität zur Ermittlung des Höhenprofils ermöglicht. Anders als herkömmliche DIC-Verfahren erfordert es keine spannungsarme Optik, hat eine höhere Lichtausbeute und ist leichter zu justieren. Dies gilt insbesondere, wenn das Objekt reflektierend und die Oberfläche von homogenem Material ist. Der Höhengradient der untersuchten Oberfläche wird im DIC-Verfahren direkt in ein Intensitätsbild übertragen. Die Transformation ergibt sich dabei aus dem konkret eingesetzten Amplitudenfilter.
Der Phasenverlauf P(x,y) innerhalb der Austrittspupille ist eine Phasenstufe mit höchstens zwei relevanten Werten.
Mit dieser Ausgestaltung der Erfindung können optische Abbildungsketten modifiziert werden, deren Aperturblende oder Pupille zwischen dem Objekt und dem Bild physisch zugänglich sind. Die Modifikation erfolgt durch ein zusätzliches Bauelement in der Austrittspupille des Objektivs. Dadurch treten im Bild des Objekts andernfalls unsichtbare Eigenschaften dieses Objekts hervor und können von einem Detektor registriert werden.
Das zusätzliche Bauelement ist bei dieser Ausgestaltung der Erfindung ein optischer Amplitudenfilter, der die gleichen optischen Wirkungen erzeugt, wie die bekannte Differentialinterferenzkontrast (DIC) -Mikroskopie. Dabei kann auf DIC-spezifische Bauteile, wie Nomarski-Prismen oder Polarisatoren, vollständig verzichtet werden. Es ist kein polarisiertes Licht erforderlich. Die vorliegende Erfindung ist daher kein Polarisationskontrastverfahren. Die Anordnung ist polarisationsunempfindlich. Abbildungsoptik muss daher geringeren Anforderungen genügen, als bei bekannten DIC-Mikroskopen. Die Anordnung ist im Durchlicht weitgehend unabhängig von der Vergrößerung und bei einigen Ausführungsbeispielen sogar vollständig unabhängig von der Vergrößerung. Ein besonderer Vorteil der Erfindung ist es, dass der Amplitudenfilter leicht nachrüstbar und justierbar ist.
$F_{DIC}(x,y)$ ist ein funktioneller Ausdruck zur Beschreibung der Amplitudenfiltertransmission und der Phase des Amplitudenfilters in Abhängigkeit von den Koordinaten x und y. Der Verlauf des Transmissionsgrads des Amplitudenfilters in x- und y-Richtung wird durch den komplexen Betrag $F_{DIC}(x,y)$ $F^*_{DIC}(x,y)$ beschrieben.
$\varphi$ ist der Richtungswinkel der Wirkung des DICs in der Austrittspupillenebene. Er kann aber auch in gleichwertiger Weise den Richtungswinkel in der Bildebene angeben, wenn das durch x und y beschriebene Koordinatensystem in der Austrittspupille in die Bildebene übertragen wird.
P(x,y) repräsentiert den Phasenverlauf des Amplitudenfilters, d.h. den Verlauf des Effekts auf die Phase der auftreffenden Strahlung. Die Phase wird durch das komplexe Argument des Filters, P(x,y)=arg ($F_{DIC}$), beschrieben. Die praktische Realisierung einer solchen Phase kann durch Unterschiede $\Delta$d in der Dicke des Substrats des Amplitudenfilters erfolgen. Diese Unterschiede folgen folgender Formel:

$$(n-1)\cdot\Delta d(x,y) = \frac{P(x,y)}{2\pi}\cdot\lambda$$

wobei $\lambda$ die Wellenlänge des Lichts aus der Strahlungsquelle und n die Brechzahl des Filtersubstrats bei der Wellenlänge $\lambda$ sind. In einer alternativen Ausgestaltung der Erfindung wird der Phasenverlauf durch eine geeignete Beschichtung des Filtersubstrats hergestellt.

$P_0$ ist der Phasenoffset des Amplitudenfilters. Der Phasenoffset kann beliebig gewählt werden. Er fällt bei der Bilderzeugung heraus. Der Phasenoffset ermöglicht die Verwendung eines Amplitudenfilters mit einer gut handhabbaren Filtersubstratdicke.

$T_0$ gibt den Amplitudentransmissionsfaktor des Amplitudenfilters an. Er stellt einen konstanten Faktor dar, der von den Koordinaten x und y in der Austrittspupille unabhängig ist. Mit anderen Worten: $T_0$ repräsentiert die Grundtransmission des Filtersubstrats.

Die Verwendung eines Amplitudenfilters, dessen Eigenschaften im Wesentlichen der obigen Formel folgen, führt mit einigen Näherungen zu Spezialfällen:

Der Amplitudenfilter kann von einem reinen Intensitätsfilter gebildet sein, der in jedem Punkt die gleiche Dicke hat, d.h. $\Delta d(x,y)=0$. Dabei wird kein Phasenverlauf und insbesondere keine Phasendifferenz erzeugt. Die Strahlung aus der Strahlungsquelle braucht nicht monochromatisch sein. Der Transmissionsgrad eines solchen Intensitätsfilters hat den der Formel $F_{DIC}(x,y)F^*_{DIC}(x,y)$ folgenden Verlauf. Der Phasenverlauf $P(x,y)$ wird in allen Punkten $(x,y)$ auf Null gesetzt. Gegenüber einem Amplitudenfilter mit Phasendifferenz wird das Bild überraschenderweise trotz der Näherung nur sehr wenig unschärfer.

Zur Erzeugung eines Amplitudentransmissionsverlaufs kann der Amplitudenfilter mit Aluminium oder einem anderen geeigneten, absorbierenden Material beschichtet sein. Dadurch wird der Verlauf der Intensität in geeigneter Weise beeinflusst. Alternativ wird eine Platte verwendet, die eine in Abhängigkeit von den Koordinaten x und y veränderliche, optische Dichte aufweist.

In einer weiteren Näherung wird ebenfalls keine Phasendifferenz erzeugt, d.h. der Phasenverlauf $P(x,y)$ wird in allen Punkten $(x,y)$ auf Null gesetzt. Vielmehr ist vorgesehen, dass der Amplitudenfilter eine in der Austrittspupille verlaufende Kante aufweist, welche auf der einen Seite keine Intensität durchlässt und die Strahlung in einem Teil der Austrittspupille blockiert und auf der anderen Seite im verbleibenden Teil der Austrittspupille die maximale Intensität durchlässt, d.h. der Transmissionsgrad $T(x,y)$ wird in allen Punkten $(x,y)$ auf Null gesetzt, für die $T(x,y) \leq S$, wobei S ein Schwellwert ist mit $0 \leq S \leq T_0^2$. Vorzugsweise ist die Kante derart angeordnet, dass zumindest die Hälfte der Strahlung mit maximaler Intensität durchgelassen wird.

Bei einem alternativen Ausführungsbeispiel der Erfindung wird monochromatische Strahlung und eine Phasenstufe verwendet. Dabei kann eine der Phasen auf Null gesetzt werden.

Allen Ausführungsbeispielen dieser Ausgestaltung der Erfindung ist gemeinsam, dass kein Polarisator und kein Nomarski-Prisma erforderlich ist. Dadurch ist die Lichtausbeute der optischen Anordnung erheblich höher, als im Vergleich zu bekannten Verfahren. Es ist auch nicht erforderlich, kohärentes Licht oder eine kleine Beleuchtungsapertur zu verwenden. Die Anordnung kann unabhängig von der Art der Lichtquelle und unabhängig von der Polarisation des Lichts eingesetzt werden.

Die Wirkungsweise des Amplitudenfilters in der Austrittspupille kann mit folgenden Überlegungen hergeleitet werden:

Theoretisch kann ein Differentialinterferenzkontrast (DIC) als Ergebnis zweier unabhängiger Amplitudenfilter auf die optische Übertragungsfunktion im Rahmen einer partiell kohärenten Abbildung im Mikroskop beschrieben werden. Der Differentialinterferenzkontrast entsteht im Bildraum aus zwei zueinander senkrecht polarisierten und daher unabhängigen Hellfeldbeleuchtungen. Die Strahlung unterscheidet sich voneinander durch ihre systematischen Phasengradienten in der Eintrittspupille des Mikroskopobjektivs. Beide Phasengradienten sind betragsgleich, "quasilinear" und von gleicher Richtung. Die Phasengradienten haben aber einen entgegengesetzten Richtungssinn, d.h. sie haben ein entgegengesetztes Vorzeichen. Die Richtung der Phasengradienten wird bei klassischer DIC durch die Richtung der beiden Keile des Nomarski-Prismas im Beleuchtungsstrahlengang vorgegeben.

Das erste Nomarski-Prisma liegt optisch im Bereich der Eintrittspupille des Mikroskopobjektivs, aber in der Abbildungskette vor dem Objekt. Durch das Nomarski-Prisma werden zwei polarisationsabhängig gegenläufigen Phasengradienten entlang der Keilrichtung des Nomarski-Prismas hervorgerufen.

Das zweite Nomarski-Prisma ist im Abbildungsstrahlengang physisch im Bereich der Austrittspupille des Mikroskopobjektivs angeordnet. Es liegt optisch am gleichen Ort, wie das erste Nomarski-Prisma, aber in der Abbildungskette hinter dem Objekt. Es ist aber so orientiert, dass es die beiden polarisationsabhängigen Phasengradienten des ersten Nomarski-Prismas kompensiert.

Die Köhlersche Beleuchtung erzeugt vom Standpunkt der partiell kohärenten Abbildung im Mikroskop eine fast vollständig inkohärente Ersatzlichtquelle in der Eintrittspupille des Mikroskopobjektivs, und diese Ersatzlichtquelle liegt in der Abbildungskette vor dem Objekt. Das in der Abbildungskette ebenfalls vor dem Objekt positionierte und in der Eintrittspupille liegende erste Nomarski-Prisma hat daher überhaupt keine abbildungsrelevante Wirkung. Es kann entfallen. Das zweite Nomarski-Prisma erzeugt die gegenläufigen Phasengradienten über der Austrittspupille. Jeder einzelnen Amplitudenverteilung jeder am Objekt gebeugten Welle die zu einem inkohärenten Punkt der Ersatzlichtquelle gehört wird einer der beiden gegenläufigen Phasengradienten aufgeprägt. Dies erfolgt polarisationsabhängig für jeden inkohärenten Beleuchtungsanteil automatisch. Es ist ausreichend, einen Polarisator in der Abbildungskette unmittelbar vor dem zweiten Nomarski-Prisma anzuordnen. Der Polarisator im Beleuchtungsstrahlengang ist nur für die Funktion des ersten Nomarski-Prismas von Bedeutung und kann mit diesem entfallen.

Ein vollständig transparenter Amplitudenfilter in der Austrittspupille des Mikroskopobjektivs, der ausschließlich aus einem quasilinearen Phasengradienten besteht, bewirkt einen lateralen Versatz des Mikroskopbildes. Dabei gilt:

$$\frac{P_{\max}}{2\pi}\lambda = A \cdot \Delta z$$

wobei

$\Delta z$:     lateraler Versatz des in die Objektebene zurückgerechneten Bildes in der Objektebene des Mikroskops in Richtung des Phasengradienten

A:     Objektapertur des Mikroskops

$P_{\max}$:     betragsgrößte Phase des Phasengradienten am Rand der Austrittspupille des Mikroskops

Der Amplitudenfilter lässt sich mittels zweier quasilinearer fiktiver Amplitudenfilter herleiten, die polarisationsabhängig die beiden gegenläufigen Phasengradienten $+P_{\max}$ und $-P_{\max}$ hervorrufen. Bei einem solchen Amplitudenfilter entfällt auch das zweite Nomarski-Prisma, sein Polarisator und sein Analysator im Abbildungsstrahlengang.

Die Polarisationsabhängigkeit der gegenläufigen Phasengradienten $\pm P_{\max}$ der fiktiven Amplitudenfilter ist für den Differentialinterferenzkontrast-Effekt selbst aber unerheblich. Vorteilhafterweise sind dann mit polarisationsunabhängigen fiktiven Amplitudenfiltern auch die Polarisationseigenschaften des Objekts unerheblich. Die fiktiven Amplitudenfilter erlauben dann die Kombination mit herkömmlichen Polarisationskontrastverfahren.

Die mathematische Darstellung der fiktiven polarisationsunabhängigen Amplitudenfilter erfolgt mittels der fiktiven Amplitudentransmissionsfaktoren $F_+$ und $F_-$, die die beiden gegenläufigen Phasengradienten repräsentieren, und für die in der oben angegebenen Notation gilt:

$$F_+\!\left(x,y\right) = T_0 \cdot e^{+iP_{\max}\cdot\left(-x\cdot\sin\varphi + y\cdot\cos\varphi\right)}$$

Der Amplitudentransmissionsfaktor $T_0$ ist reell und konstant über die Austrittspupille und liegt typischerweise zwischen 0 und 1. $\varphi$ ist die Orientierung des Phasengradienten in der Austrittspupille und nimmt einen Wert zwischen $-\pi$ und $+\pi$ an. $\varphi=0$ bedeutet "meridional positiv", also $+y$ im Koordinatensystem der Austrittspupille. $\varphi=-\pi/2$ bedeutet "sagittal positiv", also $+x$ im Koordinatensystem der Austrittspupille.

Der fiktive Amplitudentransmissionsfaktor $F_+$ wäre praktisch beispielsweise durch eine beschichtete Glasplatte in der Austrittspupille realisierbar. Die Glasplatte wäre eine Phasenplatte, deren Transmissionsgrad $F_+F^*_+$ wäre und deren Dickenänderung $\Delta d_+$ in der oben angegebenen Notation folgenden Verlauf hätte:

$$\left(n-1\right)\cdot\Delta d_+\!\left(x,y\right) = \frac{+P_{\max}}{2\pi}\cdot\lambda\cdot\left(-x\cdot\sin\varphi + y\cdot\cos\varphi\right) = +A\cdot\Delta z\cdot\left(-x\cdot\sin\varphi + y\cdot\cos\varphi\right)$$

Fügt man der durch diese Gleichung beschriebenen Phasenplatte eine gegenläufige Phasenplatte in der Austrittspupille hinzu, so ist der gesamte Effekt des Amplitudenfilters:

$$F_+\!\left(x,y\right)\cdot F_-\!\left(x,y\right) = T_0 \cdot e^{+iP_{\max}\cdot\left(-x\cdot\sin\varphi + y\cdot\cos\varphi\right)} \cdot T_0 \cdot e^{-iP_{\max}\cdot\left(-x\cdot\sin\varphi + y\cdot\cos\varphi\right)} = T_0^{\,2}$$

Mit anderen Worten: ein paarweiser, entgegengesetzter Versatz tritt nicht ein. Es tritt überhaupt kein lateraler Versatz auf, da das Licht den Hälften der Phasenplatte nicht zugeordnet ist.

Der anspruchsgemäße, technisch realisierbare Amplitudenfilter mit der Eigenschaft

$$2 \cdot F_{DIC}(x,y) = F_{+}(x,y) \cdot e^{+iP_0} + F_{-}(x,y) = 2 \cdot T_0 \cdot \cos\left(P_{\max}(-x \cdot \sin\varphi + y \cdot \cos\varphi) + \frac{P_0}{2}\right) \cdot e^{+i\frac{P_0}{2}}$$

trennt das Licht in zwei Anteile und erzeugt so den gewünschten, paarweisen, lateralen Versatz, der für die Erzeugung eines Differentialinterferenzkontrastes erforderlich ist. Entscheidend ist, dass der Effekt des zusammengesetzten Amplitudenfilters $F_{DIC}(x,y)$ einen summarischen Verlauf des Amplitudentransmissionsfaktors mit einem summarischen Verlauf der Phase hat. Die kombinierte Wirkung des fiktiven Amplitudenfilterpaares $F_+$, $F_-$ kann damit in einen technisch realisierbaren Intensitätsfilter und eine ebenfalls technisch realisierbare Phasenplatte aufgeteilt werden, indem der Amplitudenfilter als das komplexe Produkt eines Transmissionsgrades $T(x,y)$ und einer Phase $P(x,y)$ ausgedrückt wird. $T(x,y)$ und $P(x,y)$ müssen aber die Wirkung von $F_{DIC}(x,y)$ auf die komplexen Lichtamplituden herbeiführen, und das kann auf eineindeutige Weise nur erreicht werden, indem ein gegebenenfalls negativer Amplitudentransmissionsfaktor

$$F_{DIC}(x,z) = t(x,z) \cdot e^{i\frac{P_0}{2}}$$ an der Stelle $(x,y)$ durch einen nicht-negativen Amplitudentransmissionsfaktor

$$F_{DIC}(x,z) = \sqrt{T(x,z)} \cdot e^{iP(x,z)}$$ ersetzt wird und die Phase $P_0/2$ eine Zusatzphase $\pi$ mit $P(x,y)=P_0/2+\pi$ erhält; der Amplitudentransmissionsfaktor kann so eineindeutig in Form einer optischen Dichte ausgedrückt werden. Die gegebenenfalls modifizierte Phase $P(x,y)$ kann wieder durch eine Variation der Glasplattendicke des Filtersubstrats ausgedrückt werden.

Für den Verlauf des Transmissionsgrads $I_T(x,y)$ des Amplitudenfilters $F_{DIC}(x,y)$ kann jede Verteilung $I_T(x,y)=I_0 \cdot T(x,y)$ verwendet werden, wobei $0<I_0$ einen beliebigen Normierungsfaktor darstellt. Für die Phasenplatte, die die gegebenenfalls modifizierte Phase $P(x,y)$ repräsentiert, gilt $e^{iP(x,y)} = \dfrac{F_{DIC}}{\sqrt{T(x,y)}}$.

Die beschriebene Anordnung unterscheidet sich von der Foucaultschen Schneide. Die Foucaultsche Schneide befindet sich in der Bildebene oder in einer Zwischenbildebene eines Objektivs. Die DIC-Schneide befindet sich dagegen in der Austrittspupille oder in einer Pupille eines Objektivs. Mit der Foucaultsche Schneide wird idealerweise ein Punktobjekt verwendet. Die Objektausdehnung soll jedenfalls von der Größenordnung einer Airy Disk ($1.22 \cdot \lambda/A$) sein. Die DIC-Schneide ist nur bei Anwendung auf ausgedehnte Objekte sinnvoll, für Punktobjekte ist sie nutzlos. Die Foucaultsche Schneide wird auf Intensitätsobjekte angewendet, für Phasenobjekte ist sie wertlos. Die DIC-Schneide ist bei reinen Phasenobjekten besonders vorteilhaft.

Die erfindungsgemäße Anordnung kann zur optischen Messung von Höhenprofilen von Oberflächen verwendet werden, wobei Höhengradienten innerhalb des Höhenprofils durch Intensitätsgradienten in dem Differentialdifferentialkontrastbild repräsentiert sind, welche quantitativ oder qualitativ auswertbar sind. Die Anordnung kann besonders vorteilhaft verwendet werden, wenn die Oberflächen Strukturen mit einem definierten Profil aufweisen, bei denen Intensitätsgradienten im Differentialinterferenzkontrastbild, die innerhalb einer vorgegebenen Toleranz und innerhalb eines vorgegebenen Bereichs einen von einem Soll-Wert abweichenden Wert oder einen innerhalb einer vorgegebenen Toleranz und innerhalb eines vorgegebenen Bereichs liegenden, ausgewählten Wert, insbesondere Null, annehmen, einen Defekt anzeigen.

Ausgestaltungen der Erfindung sind Gegenstand der Unteransprüche. Ein Ausführungsbeispiel ist nachstehend unter Bezugnahme auf die beigefügten Zeichnungen näher erläutert.

**Kurze Beschreibung der Zeichnungen**

Fig.1    ist eine schematische Darstellung der Komponenten eines Durchlicht-Mikroskops zur Erzeugung eines Differentialinterferenzkontrast-Bildes mit Strahlengang.

Fig.2    ist eine schematische Darstellung der Membran eines intakten Sensors im DIC-Auflichtbild.

Fig.3    ist eine geschnittene Darstellung des Sensors aus Figur 2 entlang einer Schnittachse von oben nach unten in Figur 2.

Fig.4    ist eine geschnittene Darstellung des Sensors aus Figur 2 entlang einer in Figur 2 horizontalen Schnittachse.

Fig.5    ist eine schematische Darstellung der Membran eines defekten Sensors im DIC-Auflichtbild.

Fig.6    ist eine geschnittene Darstellung des Sensors aus Figur 5 entlang einer Schnittachse von oben nach unten in Figur 5.

Fig.7    ist eine geschnittene Darstellung des Sensors aus Figur 5 entlang einer in Figur 5 horizontalen Schnittachse.

## Beschreibung des Ausführungsbeispiels

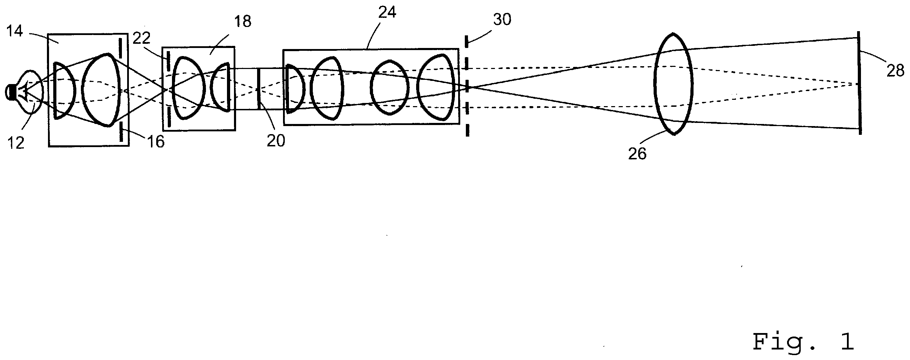

Figur 1 zeigt ein allgemein mit 10 bezeichnetes Durchlicht-Mikroskop zur Erzeugung eines Differentialinterferenzkontrast-Bildes. Das Mikroskop 10 weist eine Lampe 12 als Strahlungsquelle auf. Vor der Lampe 12 ist ein Kollektor 14 mit einer Linsenanordnung und einer Leuchtfeldblende 16 in der Leuchtfeldblendenebene angeordnet. Die Beleuchtungsanordnung des Mikroskops 10 weist ferner einen Kondensor 18 mit einer Linsenanordnung und einer Beleuchtungsaperturblende 22 auf. Kollektor 14 und Kondensor 18 sind derart angeordnet, dass das Objekt 20 in der Objektebene mit einer Köhlerschen Beleuchtung beleuchtet wird. Dabei wird die Leuchtfeldblendenebene mit dem Kondensor 18 in die Objektebene abgebildet. Dies ist anhand des Strahlengangs in Figur 1 gut zu erkennen. Die Objektebene wird auf diese Weise auch mit ungleichmäßig strahlender Lichtquelle gleichmäßig beleuchtet.

Das in der Objektebene befindliche Objekt 20 mit einer Oberfläche 40 wird auf übliche Weise mittels eines Objektivs 24 mit einer geeigneten Objektivlinsenanordnung und einer Tubuslinse 26 in die Bildebene 28 abgebildet. Wie in Figur 1 zu erkennen ist, ist die optische Anordnung derart ausgebildet, dass die Beleuchtungsaperturebene 22 in die Austrittspupillenebene 30 des Objektivs 24 abgebildet wird.

Die beschriebene Anordnung ist soweit bekannt und entspricht herkömmlichen Mikroskop-Anordnungen. In der Austrittspupillenebene ist aber, anders als bei bekannten Mikroskopen, ein Amplitudenfilter in Form einer Schneide angeordnet. Das bedeutet, dass der Filter auf einer Seite der Kante keine und auf der anderen Seite der Kante die gesamte Intensität durchlässt. Je weiter außen die Kante angeordnet ist, umso mehr Licht fällt auf den Detektor in der Bildebene. Die Abbildungsqualität sinkt jedoch.

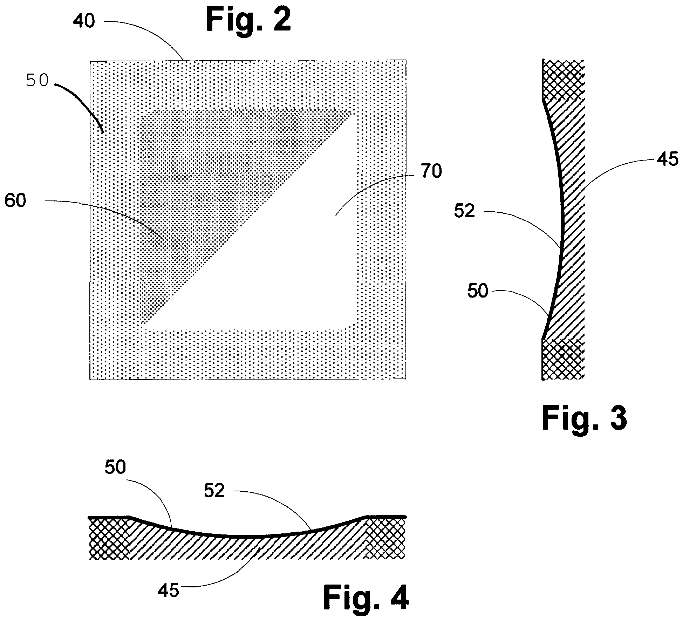

Mit der Schneide wird eine Phase und damit ein Differentialinterferenzkontrastbild erzeugt. Ein Beispiel für ein solches Bild eines Phasenobjekts ist in Figur 2 bis 7 beispielhaft dargestellt.

Statt eines Durchlicht-Mikroskops ist es auch möglich, ein Auflicht-Mikroskop zu verwenden. Auch hier ist der Amplitudenfilter in der Austrittspupillenebene des Objektivs angeordnet. Die Einkopplung der Beleuchtung von der Seite erfolgt mittels eines halbdurchlässigen Spiegels im Strahlengang zwischen Objektiv und Tubuslinse.

Figuren 2 bis 7 illustrieren, wie mit der beschriebenen Anordnung die Prüfung von Drucksensoren 40 auf MEMS-Basis erfolgt. Die zu prüfenden Drucksensoren 40 sind so gestaltet, dass ein Hohlraum 45, in dem ein Unterdruck besteht von einer Membran 50 luftdicht abgedeckt wird. In der Regel handelt es sich bei den Membranen 50 um eine dünne Si-Membran. Die Membran 50 ist daher nach innen durchgebogen. Figur 2 bis 4 zeigen das aufgenommene DIC-Bild mit entsprechend unterschiedliche Intensitäten in verschiedenen Bereichen 60 und 70 der Membran 50 und die zugehörigen Querschnitte. Die Wölbung 52 ist in den Querschnitten ebenfalls gut zu erkennen.

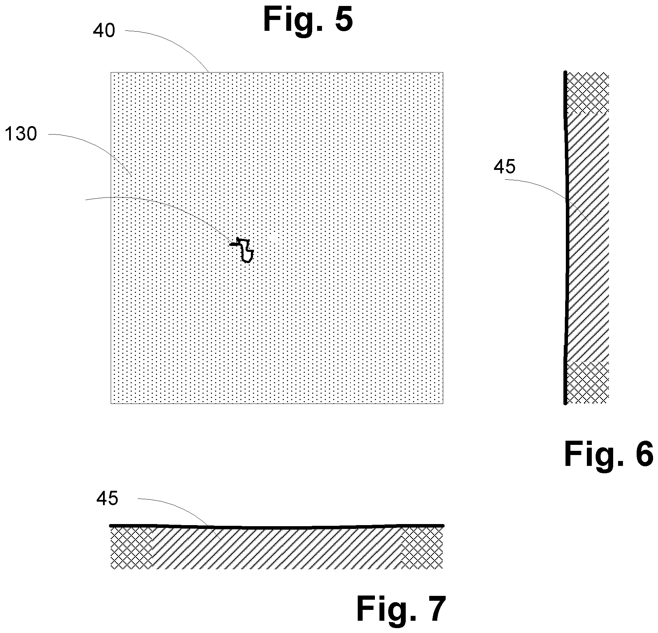

Sensoren deren Defekt darin besteht, dass die benutzte Materialmembran 50 durchlöchert oder gerissen ist, lassen sich mit dem Verfahren gut erkennen. Intakte Drucksensoren lassen sich von defekten dadurch unterscheiden, dass die intakten Sensoren eingewölbt sind, während die defekten Sensormembranen, wie in Figur 5 bis 7 dargestellt, flach verlaufen. Dies ergibt sich bei dieser Art von Drucksensoren daraus, dass im Messvolumen ein Unterdruck herrscht und der intakte Sensor daher eine eingewölbte Membranfläche aufweist. Ist die Membran, beispielsweise an einer Stelle 54 defekt, kann sich der Druck zwischen Innenraum 45 (das Druckmessvolumen) und Umgebung durch den Defekt 54 ausgleichen und die Membran 40 und die Wölbung 52 der Membran entspannt sich.

In Fig.5 bis 7 wird eine defekte Membran dargestellt. Die Membran ist daher flach im Verlauf. Es bilden sich keine Phasenunterschiede für die reflektierten Lichtwellen. Das DIC-Bild in Figur 5 zeigt dementsprechend für die gesamte Membranfläche 130 eine einheitliche Intensität. Der Intensitätsgradient ist im gesamten Bereich innerhalb eines Toleranzbereichs gleich Null.

Wird das DIC-Bild auf herkömmliche Art und Weise erstellt, ist eine quantitative Auswertung der Intensität zur Ermittlung eines Höhenprofiles nur bedingt möglich. Dies ergibt sich aus den Unzulänglichkeiten und Beschränkungen des Verfahrens. So erfordert es eine spannungsarme Optik, hat eine geringe Lichtausbeute, und erfordert eine aufwändige Justage.

Wird das DIC-Bild mit obiger Anordnung aus Figur 1 mit einer Schneide oder einem anderen geeigneten Amplitudenfilter erstellt, ist eine quantitative Auswertung gut möglich. Dies gilt insbesondere, wenn das Objekt reflektierend und die Oberfläche von homogenem Material ist. Der Höhengradient des untersuchten Objektes wird im DIC-Verfahren direkt in ein Intensitätsbild übertragen. Die Transformation ergibt sich dabei aus dem konkret eingesetzten Amplitudenfilter.

Bei einem weiteren, nicht dargestellten Ausführungsbeispiel werden Mikrolinsen und Mikrolinsenarrays untersucht. Jede Linse weist eine konkave oder konvexe Oberfläche auf, je nachdem, ob es sich um eine Sammellinse oder eine Zerstreuungslinse handelt. Fehlende Linsenelemente sind daher an der fehlenden Oberflächenwölbung zu identifizieren.

Bei einem weiteren, nicht dargestellten Ausführungsbeispiel erfolgt eine Funktionsprüfung von Beschleunigungs-, Drehraten- und Lagesensoren. Alle diese Sensoren in MEMS-Ausführung basieren im Grundprinzip darauf, dass eine geeignete Probenmasse an mikroskopischen Federn aufgehängt wird, die sich dann unter dem Einfluss der Schwerkraft, Rotation bzw. Lage bewegt. Die Bewegung geht in vielen Fällen einher mit einer Neigung einer beobachtbaren Oberfläche. Fehlfunktionen können daher an unzureichender oder überschwingender Neigung erkannt werden.

Bei einem weiteren, nicht dargestellten Ausführungsbeispiel erfolgt eine Funktionsprüfung von Mikrospiegel-Arrays (DMD - Digital micromirror device). Ein solches Mikrospiegelarray besteht aus einer Vielzahl von mikroskopischen Spiegelelementen, welche an Federelementen angeordnet sind. Jeder Spiegel kann einzeln durch zwei Elektroden mittels elektrostatischer Kräfte gesteuert und so aus seiner Ruhelage ausgelenkt werden. Wird ein Spiegelelement geneigt, ergibt sich im DIC-Bild ein entsprechender Intensitätsverlauf über die abgebildete Spiegelfläche. Betrachtet man das gesamte Array auf diese Weise, müssen bei gleichartiger Ansteuerung alle Spiegelelemente das gleiche Intensitätsmuster zeigen. Defekte Spiegel oder Spiegelsteuerungen können daher sehr leicht und schnell erkannt werden.

## Patentansprüche

1. Anordnung zur optischen Messung von Höhenprofilen von Oberflächen, enthaltend

   (a) eine Strahlungsquelle zur Beleuchtung der Oberfläche mit Licht aus der Strahlungsquelle; und
   (b) ein optisches Aufnahmesystem eingerichtet zur Aufnahme eines Bildes des Höhenprofils mit einer Kamera und einem Objektiv zur Abbildung der Objektebene in eine Bildebene, wobei das Objektiv eine Austrittspupille und eine Eintrittspupille aufweist;

   **gekennzeichnet durch**

   (c) eine Köhlersche Beleuchtungoptik zur Beleuchtung der Oberfläche mit Licht aus der Strahlungsquelle, wobei die Eintrittspupille des Objektivs in der Beleuchtungspupille der Köhlerschen Beleuchtungsoptik liegt; und
   (d) ein oder mehrere Bauelemente zur Erzeugung eines Differentialinterferenzkontrastbildes, bei dem Höhengradienten innerhalb des Höhenprofils durch Intensitätsgradienten repräsentiert sind, welche quantitativ oder qualitativ auswertbar sind,
   (e) wobei die Bauelemente zur Erzeugung eines Differentialinterferenzkontrastbildes von einem Amplitudenfilter in der Austrittspupille des Objektivs mit einem Amplitudentransmissionsfaktor $F_{DIC}(x,y)$ gebildet sind, der der Formel genügt:

$$2 \cdot F_{DIC}(x, y) = F_{+}(x, y) \cdot e^{+iP_0} + F_{-}(x, y) = 2 \cdot T_0 \cdot \cos\left( P_{\max}\left( -x \cdot \sin\varphi + y \cdot \cos\varphi \right) + \frac{P_0}{2} \right) \cdot e^{+i\frac{P_0}{2}}$$

   wobei

   x,y: Koordinaten in der Austrittspupillenebene
   $F_{DIC}(x,y)$: Funktioneller Ausdruck zur Beschreibung der Amplitudenfiltertransmission und der Phase des Amplitudenfilters in Abhängigkeit von den Koordinaten x und y
   t(x,y): variabler, reeller Teil des Amplitudentransmissionsfaktors des Amplitudenfilters mit

$$t(x, y) = T_0 \cdot \cos\left( P_{\max}\left( -x \cdot \sin\varphi + y \cdot \cos\varphi \right) + \frac{P_0}{2} \right)$$

T(x,y): Transmissionsgrad des Amplitudenfilters. Bezeichnet $F^*_{DIC}(x,y)$ das konjugiert komplexe $F_{DIC}(x,y)$, dann

$$T(x,y) = F_{DIC}(x,y) \cdot F^*_{DIC}(x,y) = t^2(x,y)$$

F+(x,y): "positiver" Anteil von $F_{DIC}$, mit $F_+(x,y) = T_0 \cdot e^{+iP_{max} \cdot (-x \cdot \sin\varphi + y \cdot \cos\varphi)}$
φ: Richtungswinkel der Wirkung des DICs in der Austrittspupillenebene
P(x,y): Phasenverlauf des Amplitudenfilters mit

$$P(x,y) = \arg(F_{DIC}) = \begin{cases} \dfrac{P_0}{2} & -\pi \leq 2P_{max} \cdot (-x \cdot \sin\varphi + y \cdot \cos\varphi) + P_0 \leq \pi \\[2mm] \dfrac{P_0}{2} + \pi & \pi \leq 2P_{max} \cdot (-x \cdot \sin\varphi + y \cdot \cos\varphi) + P_0 \leq 3\pi \end{cases}$$

F-(x,y): "negativer" Anteil von $F_{DIC}$, mit

$$F_+(x,y) \cdot F_-(x,y) = T_0 \cdot e^{+iP_{max} \cdot (-x \cdot \sin\varphi + y \cdot \cos\varphi)} \cdot T_0 \cdot e^{-iP_{max} \cdot (-x \cdot \sin\varphi + y \cdot \cos\varphi)} = T_0^2$$

$P_0$: konstanter, reeller Phasenoffset des Amplitudenfilters $F_{DIC}(x,y)$
$T_0$: konstanter, reeller Amplitudentransmissionsfaktor von $F_{DIC}$, bzw. $F_+$ und $F_-$ mit $T_0$ ungleich 0
$P_{max}$: konstante, reelle Maximalphase von $F_+$ bzw. $F_-$

2. Anordnung nach Anspruch 1, **dadurch gekennzeichnet, dass** der Amplitudenfilter von einem reinen Intensitätsfilter gebildet ist, der in jedem Punkt die gleiche Substratdicke hat.

3. Anordnung nach einem der vorgehenden Ansprüche, **dadurch gekennzeichnet, dass** der Amplitudenfilter zur Erzeugung eines Amplitudentransmissionsverlaufs mit Aluminium oder einem anderen geeigneten, absorbierenden Material beschichtet ist.

4. Anordnung nach einem der vorgehenden Ansprüche, **dadurch gekennzeichnet, dass** die nullte Beugungsordnung des am Objekt gebeugten Lichts mit maximaler Intensität durchgelassen wird.

5. Verwendung einer Anordnung nach einem der vorgehenden Ansprüche zur optischen Messung von Höhenprofilen von Oberflächen, wobei Höhengradienten innerhalb des Höhenprofils durch Intensitätsgradienten in dem Differentialdifferentialkontrastbild repräsentiert sind, welche quantitativ oder qualitativ auswertbar sind.

6. Verwendung nach Anspruch 5, **dadurch gekennzeichnet, dass** die Oberflächen Strukturen mit einem definierten Profil aufweisen, bei denen Intensitätsgradienten im Differentialinterferenzkontrastbild, die innerhalb einer vorgegebenen Toleranz und innerhalb eines vorgegebenen Bereichs einen von einem Soll-Wert abweichenden Wert oder einen innerhalb einer vorgegebenen Toleranz und innerhalb eines vorgegebenen Bereichs liegenden, ausgewählten Wert, insbesondere Null, annehmen, einen Defekt anzeigen.

7. Verfahren zur optischen Messung von Höhenprofilen von Oberflächen mit einer Anordnung nach einem der Ansprüche 1 bis 4, bei welchem ein Bild des Höhenprofils mit einem optischen Aufnahmesystem aufgenommen wird, wobei das Bild ein Differentialinterferenzkontrastbild ist und Höhengradienten innerhalb des Höhenprofils durch Intensitätsgradienten repräsentiert sind, welche quantitativ oder qualitativ auswertbar sind, **dadurch gekennzeichnet, dass** das Differentialinterferenzkontrastbild unter Verwendung eines Amplitudenfilters in der Austrittspupille des Objektivs mit einem Amplitudentransmissionsfaktor $F_{DIC}(x,y)$ erzeugt wird, der der Formel genügt:

$$2 \cdot F_{DIC}(x,y) = F_+(x,y) \cdot e^{+iP_0} + F_-(x,y) = 2 \cdot T_0 \cdot \cos\left(P_{max}(-x \cdot \sin\varphi + y \cdot \cos\varphi) + \frac{P_0}{2}\right) \cdot e^{+i\frac{P_0}{2}}$$

wobei

x,y: Koordinaten in der Austrittspupillenebene

$F_{DIC}(x,y)$: Funktioneller Ausdruck zur Beschreibung der Amplitudenfiltertransmission und der Phase des Amplitudenfilters in Abhängigkeit von den Koordinaten x und y

t(x,y): variabler, reeller Teil des Amplitudentransmissionsfaktors des Amplitudenfilters mit

$$t(x, y) = T_0 \cdot \cos\left( P_{max}(-x \cdot \sin\varphi + y \cdot \cos\varphi) + \frac{P_0}{2} \right)$$

T(x,y): Transmissionsgrad des Amplitudenfilters. Bezeichnet $F^*_{DIC}(x,y)$ das konjugiert komplexe $F_{DIC}(x,y)$, dann

$$T(x, y) = F_{DIC}(x, y) \cdot F^*_{DIC}(x, y) = t^2(x, y)$$

$F_+(x,y)$: "positiver" Anteil von $F_{DIC}$, mit $F_+(x,y) = T_0 \cdot e^{+iP_{max} \cdot (-x \cdot \sin\varphi + y \cdot \cos\varphi)}$

$\varphi$: Richtungswinkel der Wirkung des DICs in der Austrittspupillenebene

P(x,y): Phasenverlauf des Amplitudenfilters mit

$$P(x, y) = \arg(F_{DIC}) = \begin{cases} \dfrac{P_0}{2} & -\pi \leq 2P_{max} \cdot (-x \cdot \sin\varphi + y \cdot \cos\varphi) + P_0 \leq \pi \\ \dfrac{P_0}{2} + \pi & \pi \leq 2P_{max} \cdot (-x \cdot \sin\varphi + y \cdot \cos\varphi) + P_0 \leq 3\pi \end{cases}$$

$F_-(x,y)$: "negativer" Anteil von $F_{DIC}$, mit

$$F_+(x, y) \cdot F_-(x, y) = T_0 \cdot e^{+iP_{max} \cdot (-x \cdot \sin\varphi + y \cdot \cos\varphi)} \cdot T_0 \cdot e^{-iP_{max} \cdot (-x \cdot \sin\varphi + y \cdot \cos\varphi)} = T_0^2$$

$P_0$: konstanter, reeller Phasenoffset des Amplitudenfilters $F_{DIC}(x,y)$

$T_0$: konstanter, reeller Amplitudentransmissionsfaktor von $F_{DIC}$, bzw. $F_+$ und $F_-$ mit $T_0$ ungleich 0

Pmax: konstante, reelle Maximalphase von $F_+$ bzw. $F_-$

8. Verfahren nach Anspruch 7, **dadurch gekennzeichnet, dass** die Oberflächen Strukturen mit einem definierten Profil aufweisen, bei denen Intensitätsgradienten im Differentialinterferenzkontrastbild, die innerhalb einer vorgegebenen Toleranz und innerhalb eines vorgegebenen Bereichs einen von einem Soll-Wert abweichenden Wert oder einen innerhalb einer vorgegebenen Toleranz und innerhalb eines vorgegebenen Bereichs liegenden, ausgewählten Wert, insbesondere Null, annehmen, einen Defekt anzeigen.

9. Verfahren nach Anspruch 7, **dadurch gekennzeichnet, dass** die Oberflächen Membranen von Drucksensoren auf Micro-Electro-Mechanical Systems (MEMS)-Basis umfassen, bei denen Intensitätsgradienten im Differentialinterferenzkontrastbild, die innerhalb einer vorgegebenen Toleranz und innerhalb eines vorgegebenen Bereichs Null sind, eine defekte Membran anzeigen.

10. Verfahren nach Anspruch 7, **dadurch gekennzeichnet, dass** die Oberflächen Mikrolinsen und/oder Mikrolinsenarrays mit konkav und/oder konvex gewölbten Linsenoberflächen umfassen, bei denen Intensitätsgradienten im Differentialinterferenzkontrastbild, die innerhalb einer vorgegebenen Toleranz und innerhalb eines vorgegebenen Bereichs Null sind, eine fehlende Linse anzeigen.

11. Verfahren nach Anspruch 7, **dadurch gekennzeichnet, dass** die Oberflächen Beschleunigungs-, Drehraten und/oder Lagesensoren in MEMS-Ausführung umfassen, bei welchen Probenmasse an Federn vorgesehen ist, deren Bewegung eine Neigung der Probenoberfläche bewirkt, welche im Differentialinterferenzkontrastbild darstellbar und mit Referenzen vergleichbar ist.

**12.** Verfahren nach Anspruch 7, **dadurch gekennzeichnet, dass** die Oberflächen Mikrospiegelarrays eines Digital Micromirror Device (DMD) umfassen, welche an Federelementen befestigte, steuerbare Spiegel aufweisen, deren Ausrichtung im Differentialinterferenzkontrastbild darstellbar und mit Referenzen vergleichbar ist.

**Claims**

**1.** Assembly for optically measuring height profiles of surfaces, comprising

(a) a radiation source for illuminating the surface with light from the radiation source; and
(b) an optical detection system adapted to take an image of the height profile with a camera and an objective for imaging the object plane to an image plane, wherein the objective has an exit pupil and an entrance pupil;

**characterized by**

(c) a Kohler illuminating optical assembly for illuminating the object plane with light from the radiation source; wherein the entrance pupil of the objective is positioned in the illuminating pupil of the Kohler illuminating optical assembly; and
(d) one or more components for the generation of a differential interference contrast image where the height gradients within the height profile are represented by intensity gradients which can be quantitatively or qualitatively evaluated,
(e) wherein the compontens for the generation of a differential interference contrast image are formed by an amplitude filter in the exit pupil of the objective with an amplitude transmission factor $F_{DIC}(x,y)$, which complies with the equation:

$$2 \cdot F_{DIC}(x, y) = F_{+}(x, y) \cdot e^{+iP_0} + F_{-}(x, y) = 2 \cdot T_0 \cdot \cos\left( P_{\max}(-x \cdot \sin\varphi + y \cdot \cos\varphi) + \frac{P_0}{2} \right) \cdot e^{+i\frac{P_0}{2}}$$

wherein

x,y: coordinates in the exit pupil plane
$F_{DIC}(x,y)$: functional expression for describing the amplitude filter transmission and the phase of the amplitude filter as a function of x and y
t(x,y): variable, real portion of the amplitude transmission factor of the amplitude filter with

$$t(x, y) = T_0 \cdot \cos\left( P_{\max}(-x \cdot \sin\varphi + y \cdot \cos\varphi) + \frac{P_0}{2} \right)$$

T(x,y): Transmission degree of the amplitude filter. If $F^{*}_{DIC}(x,y)$ designates the conjugate-complex of $F_{DIC}(x, y)$, then

$$T(x, y) = F_{DIC}(x, y) \cdot F^{*}_{DIC}(x, y) = t^2(x, y)$$

$F_{+}(x,y)$: "positive" portion of $F_{DIC}$, with $F_{+}(x,y) = T_0 \cdot e^{+iP_{\max} \cdot (-x \cdot \sin\varphi + y \cdot \cos\varphi)}$
$\varphi$: azimuth direction angle of the effect of the DIC in the exit pupil plane
P(x,y): phase distribution of the amplitude filter with

$$P(x, y) = \arg(F_{DIC}) = \begin{cases} \dfrac{P_0}{2} & -\pi \leq 2P_{\max} \cdot (-x \cdot \sin\varphi + y \cdot \cos\varphi) + P_0 \leq \pi \\ \dfrac{P_0}{2} + \pi & \pi \leq 2P_{\max} \cdot (-x \cdot \sin\varphi + y \cdot \cos\varphi) + P_0 \leq 3\pi \end{cases}$$

F-(x,y): "negative" portion of $F_{DIC}$, with

$$F_+(x,y) \cdot F_-(x,y) = T_0 \cdot e^{+iP_{max} \cdot (-x \cdot \sin\varphi + y \cdot \cos\varphi)} \cdot T_0 \cdot e^{-iP_{max} \cdot (-x \cdot \sin\varphi + y \cdot \cos\varphi)} = T_0^2$$

$P_0$: constant, real phase offset of the amplitude filter $F_{DIC}(x,y)$
To: constant, real amplitude transmission factor of $F_{DIC}$, or $F_+$ and $F_-$, resp.
$P_{max}$: constant, real maximum phase of $F_+$ or $F_-$, resp

2. Assembly according to claim 1, **characterized in that** the amplitude filter is an intensity filter which has the same substrate thickness in every point.

3. Assembly according to any of the preceding claims, **characterized in that** the amplitude filter for the generation of an amplitude transmission distribution is coated with aluminum or any other suitable absorbing material.

4. Assembly according to any of the preceding claims, **characterized in that** the zero diffraction order of the light diffracted by the object passes with maximum intensity.

5. Use of an assembly according to any of the preceding claims for the optical measurement of height profiles of surfaces, wherein height gradients within the height profile is represented by intensity gradients in the differential interference contrast image, which are adapted to be quantitatively or qualitatively evaluated.

6. Use according to claim 5, **characterized in that** the surfaces are provided with structures having a well defined profile, where intensity gradients in the differential interference contrast image within a given tolerance and within a given range deviating from a set value or assume a selected value, in particular zero, within a given tolerance and within a given range, indicate a defect.

7. Method for optically measuring height profiles of surfaces with an assembly according to any of claims 1 to 4, wherein an image of the height profile is taken with an optical detection system, wherein the image is a differential interfere contrast image and height gradients within the height profile are represented by intensity gradients, which are adapted to be quantitatively or qualitatively evaluated, **characterized in that** the differential interference contrast image is generated using components for the generation of a differential interference contrast image which are formed by an amplitude filter in the exit pupil of the objective with an amplitude transmission factor $F_{DIC}(x,y)$, which complies with the equation:

$$2 \cdot F_{DIC}(x,y) = F_+(x,y) \cdot e^{+iP_0} + F_-(x,y) = 2 \cdot T_0 \cdot \cos\left(P_{max}(-x \cdot \sin\varphi + y \cdot \cos\varphi) + \frac{P_0}{2}\right) \cdot e^{+i\frac{P_0}{2}}$$

wherein

x,y: coordinates in the exit pupil plane
$F_{DIC}(x,y)$: functional expression for describing the amplitude filter transmission and the phase of the amplitude filter as a function of x and y
t(x,y): variable, real portion of the amplitude transmission factor of the amplitude filter with

$$t(x,y) = T_0 \cdot \cos\left(P_{max}(-x \cdot \sin\varphi + y \cdot \cos\varphi) + \frac{P_0}{2}\right)$$

T(x,y): Transmission degree of the amplitude filter. If $F^*_{DIC}(x,y)$ designates the conjugate-complex of $F_{DIC}(x,y)$, then

$$T(x,y) = F_{DIC}(x,y) \cdot F^*_{DIC}(x,y) = t^2(x,y)$$

$F_+(x,y)$: "positive" portion of $F_{DIC}$, with $F_+(x,y) = T_0 \cdot e^{+iP_{max} \cdot (-x \cdot \sin\varphi + y \cdot \cos\varphi)}$
$\varphi$: azimuth direction angle of the effect of the DIC in the exit pupil plane
P(x,y): phase distribution of the amplitude filter with

$$P(x,y) = \arg(F_{DIC}) = \begin{cases} \dfrac{P_0}{2} & -\pi \le 2P_{max} \cdot (-x \cdot \sin\varphi + y \cdot \cos\varphi) + P_0 \le \pi \\ \dfrac{P_0}{2} + \pi & \pi \le 2P_{max} \cdot (-x \cdot \sin\varphi + y \cdot \cos\varphi) + P_0 \le 3\pi \end{cases}$$

$F-(x,y)$: "negative" portion of $F_{DIC}$, with

$$F_+(x,y) \cdot F_-(x,y) = T_0 \cdot e^{+iP_{max} \cdot (-x \cdot \sin\varphi + y \cdot \cos\varphi)} \cdot T_0 \cdot e^{-iP_{max} \cdot (-x \cdot \sin\varphi + y \cdot \cos\varphi)} = T_0^2$$

$P_0$: constant, real phase offset of the amplitude filter $F_{DIC}(x,y)$
To: constant, real amplitude transmission factor of $F_{DIC}$, or $F_+$ and $F_-$, resp.
$P_{max}$: constant, real maximum phase of $F_+$ or $F_-$, resp

8. Method according to claim 7, **characterized in that** the surfaces are provided with structures having a well defined profile, where intensity gradients in the differential interference contrast image within a given tolerance and within a given range deviating from a set value or assume a selected value, in particular zero, within a given tolerance and within a given range, indicate a defect.

9. Method according to claim 7, **characterized in that** the surfaces comprise diaphragms of pressure sensors on Micro-Electro-Mechanical systems (MEMS)-basis, where the intensity gradients in the differential interference contrast image which are zero within a given tolerance and within a given range indicate a defect diaphragm.

10. Method according to claim 7, **characterized in that** the surfaces comprise microsenses and/or micro lens arrays with concave and/or convex curved lens surfaces where the intensity gradients in the differential interference contrast image which are zero within a given tolerance and within a given range, indicate a missing lens.

11. Method according to claim 7, **characterized in that** the surfaces comprise acceleration-, angular rate- and/or position sensors in MEMS-form where sample mass is provided at springs having a movement causing an inclination of the sample surface which is adapted to be represented in a differential interference contrast image and to be compared with references.

12. Method according to claim 7, **characterized in that** the surfaces comprise micro mirror arrays of a digital micro mirror device (DMD), having controllable mirrors fixed to spring elements, where the direction can be represented in a differential interference contrast image and compared with references.

**Revendications**

1. Disposition pour la mesure optique de profils en hauteur de surfaces, comprenant

(a) une source de rayonnement destinée à illuminer la surface à l'aide de la lumière émanant de la source de rayonnement ; et
(b) un système optique de prise de vues destiné à prendre une image du profil en hauteur à l'aide d'une caméra et d'un objectif destinés à reproduire le plan d'objet dans un plan d'image, l'objectif présentant une pupille d'entrée et une pupille de sortie ;

**caractérisée par**

(c) un système optique d'illumination de Köhler destiné à illuminer la surface à l'aide de la lumière émanant de la source de rayonnement, la pupille d'entrée de l'objectif se trouvant dans la pupille d'illumination du système optique d'illumination de Köhler ; et
(d) un ou plusieurs composants destinés à générer une image de contraste interférentiel différentiel pour laquelle des gradients de hauteur sont représentés à l'intérieur du profil en hauteur par des gradients d'intensité qui peuvent être interprétés quantitativement ou qualitativement,

(e) les composants destinés à générer une image de contraste interférentiel différentiel étant formés d'un filtre d'amplitude situé dans la pupille de sortie de l'objectif avec un facteur de transmission d'amplitude $F_{DIC}(x,y)$ correspondant à la formule :

$$2 \cdot F_{DIC}(x,y) = F_+(x,y) \cdot e^{+iP_0} + F_-(x,y) = 2 \cdot T_0 \cdot \cos\left(P_{max}\left(-x \cdot \sin\varphi + y \cdot \cos\varphi\right) + \frac{P_0}{2}\right) \cdot e^{+i\frac{P_0}{2}}$$

où

x,y : coordonnées situées dans le plan de la pupille de sortie,
$F_{DIC}(x,y)$ : expression fonctionnelle destinée à décrire la transmission de filtre d'amplitude et la phase du filtre d'amplitude en fonction des coordonnées x et y,
t(x,y) : part réelle variable du facteur de transmission d'amplitude du filtre d'amplitude pour laquelle on a

$$t(x,y) = T_0 \cdot \cos\left(P_{max}\left(-x \cdot \sin\varphi + y \cdot \cos\varphi\right) + \frac{P_0}{2}\right),$$

T(x,y) : degré de transmission du filtre d'amplitude. Si $F^*_{DIC}(x,y)$ désigne $F_{DIC}(x,y)$ conjuguée complexe, on a

$$T(x,y) = F_{DIC}(x,y) \cdot F^*_{DIC}(x,y) = t^2(x,y),$$

F+(x,y) : part "positive" de $F_{DIC}$ pour laquelle on a $F_+(x,y) = T_0 \cdot e^{+iP_{max} \cdot (-x \cdot \sin\varphi + y \cdot \cos\varphi)}$ ,
$\varphi$ : angle de direction de l'effet du CID dans le plan de la pupille de sortie,
P(x,y) : tracé des phases du filtre d'amplitude pour lequel on a

$$P(x,y) = \arg(F_{DIC}) = \begin{cases} \dfrac{P_0}{2} & -\pi \leq 2P_{max} \cdot \left(-x \cdot \sin\varphi + y \cdot \cos\varphi\right) + P_0 \leq \pi \\ \dfrac{P_0}{2} + \pi & \pi \leq 2P_{max} \cdot \left(-x \cdot \sin\varphi + y \cdot \cos\varphi\right) + P_0 \leq 3\pi \end{cases}$$

F-(x,y) : part "négative" de $F_{DIC}$ pour laquelle on a

$$F_+(x,y) \cdot F_-(x,y) = T_0 \cdot e^{+iP_{max} \cdot \left(-x \cdot \sin\varphi + y \cdot \cos\varphi\right)} \cdot T_0 \cdot e^{-iP_{max} \cdot \left(-x \cdot \sin\varphi + y \cdot \cos\varphi\right)} = T_0^2 ,$$

$P_0$ : décalage de phases réel constant du filtre d'amplitude $F_{DIC}(x,y)$,
$T_0$ : facteur de transmission d'amplitude réel constant de $F_{DIC}$ ainsi que de $F_+$ et $F_-$ respectivement, To n'étant pas égal à 0,
$P_{max}$ : phase maximale réelle constante de $F_+$ et $F_-$ respectivement.

2. Disposition selon la revendication 1, **caractérisée en ce que** le filtre d'amplitude est formé d'un filtre d'intensité pure qui présente en chaque point la même épaisseur de substrat.

3. Disposition selon l'une quelconque des revendications précédentes, **caractérisée en ce que** le filtre d'amplitude destiné à générer un tracé de transmission d'amplitude est recouvert d'aluminium ou d'un autre matériau absorbant approprié.

4. Disposition selon l'une quelconque des revendications précédentes, **caractérisée en ce qu'on** laisse passer, avec une intensité maximale, l'ordre de diffraction zéro de la lumière diffractée au niveau de l'objet.

5. Utilisation d'une disposition selon l'une quelconque des revendications précédentes pour la mesure optique de profils en hauteur de surfaces, des gradients de hauteur étant représentés à l'intérieur du profil en hauteur dans l'image de contraste interférentiel différentiel par des gradients d'intensité qui peuvent être interprétés quantitativement ou qualitativement.

6. Utilisation selon la revendication 5, **caractérisée en ce que** les surfaces présentent des structures à profil défini pour lesquelles des gradients d'intensité montrent un défaut dans l'image de contraste différentiel, gradients prenant à l'intérieur d'une tolérance prédonnée et à l'intérieur d'une plage prédonnée une valeur s'écartant d'une valeur de consigne ou une valeur choisie se trouvant à l'intérieur d'une tolérance prédonnée et à l'intérieur d'une plage prédonnée, valeur étant notamment égale à zéro.

7. Procédé pour la mesure optique de profils en hauteur de surfaces à l'aide d'une disposition selon l'une quelconque des revendications 1 à 4, pour lequel une image du profil en hauteur est prise à l'aide d'un système optique de prise de vues, l'image étant une image de contraste interférentiel différentiel et des gradients de hauteur étant représentés à l'intérieur du profil en hauteur par des gradients d'intensité qui peuvent être interprétés quantitativement ou qualitativement, **caractérisé en ce que** l'image de contraste interférentiel différentiel est générée en utilisant un filtre d'amplitude dans la pupille de sortie de l'objectif avec un facteur de transmission d'amplitude $F_{DIC}(x,y)$ correspondant à la formule :

$$2 \cdot F_{DIC}(x,y) = F_+(x,y) \cdot e^{+iP_0} + F_-(x,y) = 2 \cdot T_0 \cdot \cos\left(P_{max}(-x \cdot \sin\varphi + y \cdot \cos\varphi) + \frac{P_0}{2}\right) \cdot e^{+i\frac{P_0}{2}}$$

où

x,y : coordonnées du plan de la pupille de sortie,
$F_{DIC}(x,y)$ : expression fonctionnelle destinée à décrire la transmission du filtre d'amplitude et de la phase du filtre d'amplitude en fonction des coordonnées x et y,
t(x,y) : part réelle variable du facteur de transmission d'amplitude du filtre d'amplitude avec

$$t(x,y) = T_0 \cdot \cos\left(P_{max}(-x \cdot \sin\varphi + y \cdot \cos\varphi) + \frac{P_0}{2}\right),$$

T(x,y) : degré de transmission du filtre d'amplitude. Si $F^*_{DIC}(x,y)$ désigne $F_{DIC}(x,y)$ conjuguée complexe on a

$$T(x,y) = F_{DIC}(x,y) \cdot F^*_{DIC}(x,y) = t^2(x,y),$$

F+(x,y) : part "positive" de $F_{DIC}$ pour laquelle on a $F_+(x,y) = T_0 \cdot e^{+iP_{max} \cdot (-x \cdot \sin\varphi + y \cdot \cos\varphi)}$,
$\varphi$ : angle de direction de l'effet du CID dans le plan de la pupille de sortie,
P(x,y) : tracé des phases du filtre d'amplitude pour lequel on a

$$P(x,y) = \arg(F_{DIC}) = \begin{cases} \dfrac{P_0}{2} & -\pi \leq 2P_{max} \cdot (-x \cdot \sin\varphi + y \cdot \cos\varphi) + P_0 \leq \pi \\ \dfrac{P_0}{2} + \pi & \pi \leq 2P_{max} \cdot (-x \cdot \sin\varphi + y \cdot \cos\varphi) + P_0 \leq 3\pi \end{cases}$$

F_(x,y) : "négative" de $F_{DIC}$ pour laquelle on a

$$F_+(x,y) \cdot F_-(x,y) = T_0 \cdot e^{+iP_{max} \cdot (-x \cdot \sin\varphi + y \cdot \cos\varphi)} \cdot T_0 \cdot e^{-iP_{max} \cdot (-x \cdot \sin\varphi + y \cdot \cos\varphi)} = T_0^2$$

$P_0$ : décalage de phases réel constant du filtre d'amplitude $F_{DIC}(x,y)$
$T_0$ : facteur de transmission d'amplitude réel constant de $F_{DIC}$ ainsi que $F_+$ et $F_-$ respectivement, To n'étant pas égal à 0,
$P_{max}$ : phase maximale réelle constante de $F_+$ et de $F_-$ respectivement.

**8.** Procédé selon la revendication 7, **caractérisé en ce que** les surfaces présentent des structures à profil défini pour lesquelles des gradients d'intensité montrent un défaut dans l'image de contraste différentiel, gradients prenant à l'intérieur d'une tolérance prédonnée et à l'intérieur d'une plage prédonnée une valeur s'écartant d'une valeur de consigne ou une valeur choisie se trouvant à l'intérieur d'une tolérance prédonnée et à l'intérieur d'une plage prédonnée, valeur étant notamment égale à zéro.

**9.** Procédé selon la revendication 7, **caractérisé en ce que** les surfaces comprennent des membranes de capteurs de pression à base de microsystèmes électromécaniques (MEMS) pour lesquels des gradients d'intensité étant égaux à zéro à l'intérieur d'une tolérance prédonnée et à l'intérieur d'une plage prédonnée montrent une membrane défectueuse dans l'image de contraste interférentiel différentiel.

**10.** Procédé selon la revendication 7, **caractérisé en ce que** les surfaces comprennent des microlentilles et/ou des matrices de microlentilles à surfaces de lentille de courbure concave et/ou convexe pour lesquelles des gradients d'intensité étant égaux à zéro à l'intérieur d'une tolérance prédonnée et à l'intérieur d'une plage prédonnée montrent une lentille manquante dans l'image de contraste interférentiel différentiel.

**11.** Procédé selon la revendication 7, **caractérisé en ce que** les surfaces comprennent des capteurs d'accélération, de rotation et/ou de position réalisés sous forme de MEMS pour lesquels une masse d'échantillon est prévue sur des ressorts dont le déplacement provoque une inclinaison de la surface d'échantillon qui peut être représentée dans l'image de contraste interférentiel différentiel et comparée à des références.

**12.** Procédé selon la revendication 7, **caractérisé en ce que** les surfaces comprennent des matrices de micro-miroirs d'un dispositif numérique à micro-miroirs (DMD) qui présentent des miroirs pouvant être commandés, fixés sur des éléments à ressort, dont l'orientation peut être représentée dans l'image de contraste interférentiel différentiel et comparée à des références.

Fig. 1

**Fig. 2**

**Fig. 3**

**Fig. 4**

# Fig. 5

40

130

# Fig. 6

45

45

# Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2214045 A1
- US 2010195873 A1
- DE 102011050674

**In der Beschreibung aufgeführte Nicht-Patentliteratur**

- modulation contrast microscope. **ROBERT HOFF-MANN et al.** Applied Optics. Optical Society of America, 01. Mai 1975, vol. 14, 1169